(19) Europäisches Patentamt
European Patent Office
Office européen des brevets

(11) **EP 4 113 110 B1**

(12) **EUROPEAN PATENT SPECIFICATION**

(45) Date of publication and mention
of the grant of the patent:
**07.08.2024 Bulletin 2024/32**

(21) Application number: **21887876.7**

(22) Date of filing: **07.06.2021**

(51) International Patent Classification (IPC):
***G01N 25/20*** (2006.01)

(52) Cooperative Patent Classification (CPC):
**G01N 25/20**

(86) International application number:
**PCT/CN2021/098589**

(87) International publication number:
**WO 2022/241866 (24.11.2022 Gazette 2022/47)**

(54) **METHOD FOR MEASURING DYNAMIC SPECIFIC HEAT CAPACITY OF ADIABATIC REACTION ON BASIS OF COMPENSATION POWER MODULATION**

VERFAHREN ZUR MESSUNG DER DYNAMISCHEN SPEZIFISCHEN WÄRMEKAPAZITÄT EINER ADIABATISCHEN REAKTION AUF BASIS EINER KOMPENSATIONSLEISTUNGSMODULATION

PROCÉDÉ DE MESURE DE CAPACITÉ THERMIQUE SPÉCIFIQUE DYNAMIQUE D'UNE RÉACTION ADIABATIQUE SUR LA BASE D'UNE MODULATION DE PUISSANCE DE COMPENSATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2021 CN 202110557328**

(43) Date of publication of application:
**04.01.2023 Bulletin 2023/01**

(73) Proprietor: **China Jiliang University**
Hangzhou, Zhejiang 310018 (CN)

(72) Inventors:
• **DING, Jiong**
Zhejiang 310018 (CN)
• **CHEN, Jinyu**
Hangzhou
Zhejiang 310018 (CN)
• **YE, Shuliang**
Hangzhou
Zhejiang 310018 (CN)

(74) Representative: **Ipside**
7-9 Allée Haussmann
33300 Bordeaux Cedex (FR)

(56) References cited:
**WO-A1-2020/151780    CN-A- 106 018 474**

CN-A- 106 645 274    CN-A- 111 812 149
JP-A- H09 222 404    US-A- 5 335 993

• XU QIYUE ET AL: "Measurement and calculation method of changing heat capacities during the reaction", THERMOCHIMICA ACTA, vol. 675, 1 May 2019 (2019-05-01), AMSTERDAM, NL., pages 55 - 62, XP093007942, ISSN: 0040-6031, DOI: 10.1016/j.tca.2019.03.004
• XU QIYUE ET AL: "Modeling of a power compensated adiabatic reaction system for temperature control design and simulation analyses", THERMOCHIMICA ACTA, vol. 657, 28 September 2017 (2017-09-28), pages 104 - 109, XP085257190, ISSN: 0040-6031, DOI: 10.1016/J.TCA.2017.09.026
• JIONG DING, JICHEN WANG, LU GUO, QIYUE XU, SHUIJUN YANG, SHULIANG YE: "Optimization of Temperature Tracking Control in Adiabatic Accelerating Rate Calorimeter Based on the Dynamic Characteristics Compensation", JOURNAL OF TRANSDUCTION TECHNOLOGY, DONGNAN DAXUE CHUBANSHE, NANJING, CN, vol. 31, no. 12, 31 December 2018 (2018-12-31), CN
, pages 1805 - 1810, XP055950553, ISSN: 1004-1699

- **KIMURA ARATA, OTSUKA TERUHITO: "Performance evaluation of differential accelerating rate calorimeter for the thermal runaway reaction of di-tert-butyl peroxide", JOURNAL OF THERMAL ANALYSIS AND CALORIMETRY, KLUWER, DORDRECHT,, NL, vol.113,no.3,1September2013(2013-09-01),NL , pages 1585 - 1591, XP055945545, ISSN: 1388-6150, DOI: 10.1007/s10973-013-3282-1**

## Description

### Technical Field

The invention relates to the field of calorimetric techniques and instruments for the safety of chemical processes, in particular to a method for measuring the varying specific heat capacity of an adiabatic reaction based on compensated power modulation and an implementation device.

### Background of the Invention

Accelerating rate calorimetry has always been regarded as an important method for analyzing chemical reactions since it was invented. The accelerating rate calorimeter, as an instrument invented based on the accelerating rate calorimetry, has been widely applied in the fields of thermal hazard evaluation of chemical process, chemicals and energetic materials because it can simulate the adiabatic environment of chemical reactions and record time-temperature-pressure data in the exothermic process of the reactions to allow researchers to calculate the thermal kinetic parameters of the reactions through a numerical method.

After being put forward by DOW in the 1970s, the accelerating rate calorimetry was successfully commercialized by Columbia Scientific. When using this technique to obtain thermal kinetic parameters (including the pre-exponential factor, the reaction order, the activation energy, and the like) and calculate the thermal hazard characterization indicators[1-2], researchers always follow two preconditions: first, a sample is presumed to be in an ideal adiabatic state, that is, the sample does not exchange heat with the ambient environment in the exothermic process of a reaction; second, the specific heat capacity of the sample is presumed to be constant during the reaction, and the value of the specific heat capacity is measured before or after the reaction[3]. However, neither of these two preconditions can be realized for a classical accelerating rate calorimeter. For the former precondition, due to the presence of a sample container, when the sample releases heat during the reaction, part of the heat will be inevitably transferred to the sample container and increase the temperature of the sample container, so an environment simulated by the accelerating rate calorimeter is a quasi-adiabatic environment rather than an ideal adiabatic environment. This problem has been gradually solved in the past several decades by introducing the pressure and power compensation technique. For example, the instrument Phi-TEC II[4] of HEL in UK, the instrument APTAC[5] of Netzsch in German, the instrument DARC[6] of Omnical technology in USA and the instrument TAC-CP 500A[7] of Young Instruments in China all can create an ideal adiabatic environment.

The later precondition cannot be realized either in actual chemical reactions. During a chemical reaction, the specific heat capacity of a reactant that is consumed continuously is different from the specific heat capacity of a product that is generated ceaselessly, so the specific heat capacity of substances involved in the chemical reaction changes continuously. Even the specific heat capacity of a pure substance is related to the state, temperature and pressure of the substance. Due to the change of the specific heat capacity, thermal kinetic study and thermal hazard evaluation based on the classical accelerating rate calorimeter may greatly deviate from the actual condition, and the heat release, which is a key indicator for thermal hazard evaluation, calculated based on an adiabatic temperature rise $\Delta T$ is unconvincing. In spite of this, researchers still use a constant specific heat capacity for numerical analysis due to the lack of a tool, which will result in an unfavorable consequence during thermal hazard evaluation: if the specific heat capacity is set too large, the evaluation will be too conservative, thus increasing storage and transport costs of chemicals or reducing chemical production efficiency; otherwise, the evaluation will be insufficient, thus causing safety accidents.

So, the measurement of the varying heat specific capacity in the reaction process is of great importance for thermal hazard evaluation of chemicals. In order to accurately obtain the specific heat capacity in the reaction process to obtain truer kinetic parameters in the reaction process to carry out safety evaluation of a chemical process. Based on the actual condition, the invention provides a method for measuring the varying specific heat capacity of an adiabatic reaction based on compensated power modulation and designs an implementation device based on this method, thus improving the level of thermal analysis kinetic study and the accuracy of thermal hazard evaluation of chemicals.

Document "Measurement and calculation method of changing heat capacities during the reaction", THERMOCHIMICA ACTA, vol. 675, 1 May 2019, pages 55-62, disclosed an asymmetric dual-channel system for measuring changing specific heat capacities during a reaction, a calculation and optimization procedure based on the energy equations and the two deviated reaction progresses from the asymmetric dual-channel system.

Document "Modeling of a power compensated adiabatic reaction system for temperature control design and simulation analyses", THERMOCHIMICA ACTA, vol. 657, 1 May 2019, pages 104-109, disclosed a principle structure of a power compensation method for sample container in the accelerating rate calorimeter, a simplified model concerning the dynamic heat transfer between the reacting sample and the sample container during the reaction progress and a temperature control strategy based the compensation structure.

Reference

[1] Townsend D.I., Tou J.C. Thermal hazard evaluation by an accelerating rate calorimeter[J]. Thermochimica Acta, 1980, 37(1):1-30.
[2] Tou J.C., Whiting L.F. The thermokinetic performance of an accelerating rate calorimeter[J]. Thermochimica Acta, 1981, 48(1):21-42.
[3] Sun Jinhua, Ding Hui. Thermal hazard evaluation of chemical substances [M]. Science Press, Beijing, 2005.
[4] HEL GROUP Phi-TEC II: Adiabatic Calorimeter for vent sizing and accurate thermal runaway testing[EB/OL]. http://www.helgroup.com/reactor-systems/thermal-hazards-and-calorimetry/phitec-ii/.
[5] Iwata Y, Momota M, Koseki H. Thermal risk evaluation of organic peroxide by automatic pressure tracking adiabatic calorimeter[J]. Journal of Thermal Analysis and Calorimetry, 2006, 85(3): 617-622.
[6] Charles F. Askonas, Dr. James P. Burelbach. The versatile VSP2: a tool for adiabatic thermal analysis and vent sizing application[C]. North American Thermal Analysis Society, 28th Annual Conference, 2000.
[7] Kimura A, Otsuka T. Performance evaluation of differential accelerating rate calorimeter for the thermal runaway reaction of di-tert-butyl peroxide[J]. Journal of Thermal Analysis and Calorimetry, 2013, 113(3): 1858-1591.

## Summary of the Invention

In view of the problem, mentioned in the description of the related art, of deviations of thermal analysis kinetic study and thermal hazard safety evaluation caused by the existing classical accelerating rate calorimetric theory that regards the specific heat capacity of a sample in the reaction process as a constant, the invention designs a method for measuring the varying specific heat capacity of an adiabatic reaction based on compensating power modulation.

The design concept of the invention is as follows: first, the idea of heat loss power compensation is put forward, the heat loss power of a sample is an enthalpy change of the sample within unit time and can be accurately calculated by measuring a temperature rise rate of a sample container in real time through a temperature sensor and measuring the heat capacity of the sample container in advance; and an algorithm is used to control a compensating heater to keep the sample ideally adiabatic. In addition, a high-frequency cosine modulating power is superposed in the compensating heater to realize an oscillation of the temperature rise rate in the reaction process. Finally, differential calculation and discrete Fourier transform are performed on an adiabatic reaction temperature of the sample under the modulation condition to separate a modulation temperature rise signal from a self-accelerating reaction temperature rise signal, so as to calculate the varying specific heat capacity.

The method of the invention specifically comprises:

(a) Before an adiabatic reaction test of a sample, measuring a specific heat capacity $C_b(T)$ and a mass $m_b$ of a sample container, and measuring a mass $m_s$ of the sample;

(b) During the test, increasing a temperature of the sample to a reaction start temperature of the sample, and with a reaction start time of the sample as a time 0, collecting a temperature of a reaction system every a time $\Delta t$, wherein a temperature change of the sample from the time 0 to a time 1 is $\Delta T(1)$, a temperature change of the sample from the time 1 to a time 2 is $\Delta T(2)$, and a temperature change of the sample from a time $(n$-1) to a time $n$ is $\Delta T(n)$;

(c) Heating the reaction system from the time 1 by a compensating heater with a total power $P_{Max}$, wherein an electric power for heating the reaction system consists of two parts: a compensating power for a heat loss of the sample, and a modulating power; calculating the compensating power $P_{EH}$ at the time n according to formula (1); and when an amplitude of the loaded modulating power is a and a frequency of the modulating power is w, calculating the modulating power $P_w$ at the time $n$ according to formula (2);

$$P_{EH} = C_b(T) \times m_b \times \frac{\Delta T(n-1)}{\Delta t} \qquad (1)$$

$$P_w = a \times cos(\, n \times \Delta t \times \omega) \qquad (2)$$

(d) Calculating and outputting PWM signals with different duty cycles to output different compensating powers, wherein the duty cycle of the PWM signal at each time is a ratio of a required electric power to the total power of the compensating heater, that is, $(P_{EH}+P_w)/P_{Max}$;

(e) Obtaining a temperature-time signal of a reaction process of the sample after the reaction, and differentiating the temperature-time signal to obtain a temperature rise rate-time signal of the sample;

(f) Segmenting the temperature rise rate-time signal every $x$ seconds, and for any one x-second signal obtained, decomposing the signal on a complex plane to obtain a real part, an imaginary part and a modulus of the signal; and

(g) Obtaining a varying specific heat capacity $Cs(T)$ of the sample every $x$ seconds according to formula (3).

$$C_s(T) = \frac{\left(\sqrt{[a^2 + (A\omega C_b(T)m_b\Delta t)^2 + 2aA\omega C_b(T)m_b sin\varphi\Delta t]}\right)}{m_s A} \quad (3)$$

In formula (3), $a$, $\omega$, $C_b(T)$, $m_b$, $\Delta t$ and $m_s$ are all known quantities, the real part and the imaginary part of each x-second signal are processed by means of an arc-tangent function to obtain $\omega$ and $A$ in formula (3).

The invention has the following beneficial effects: a dynamic change of the specific heat capacity of a sample in the reaction, that cannot be obtained by traditional accelerating rate calorimetric methods, is solved by means of modulation, differentiation and spectral analysis. Compared with the traditional constant specific heat capacity, the varying specific heat capacity can reflect the thermal decomposition process of the sample more accurately, so that more aculeate kinetic parameters of the thermal decomposition reaction of the sample can be solved.

## Brief description of the Drawings

FIG. 1 illustrates a furnace body part of an accelerating rate calorimetric device capable of dynamically measuring the specific heat capacity;

FIG. 2 illustrates a sample container part of the accelerating rate calorimetric device capable of dynamically measuring the specific heat capacity;

FIG. 3 is a block diagram of the hardware design of the accelerating rate calorimetric device capable of dynamically measuring the specific heat capacity;

FIG. 4 is a flow diagram of a temperature control algorithm of the accelerating rate calorimetric device capable of dynamically measuring the specific heat capacity;

FIG. 5 is a chart of the temperature rise in an adiabatic reaction of a DTBP toluene solution with a mass fraction of 20% under the condition of a linearly changing heat capacity;

FIG. 6 is a chart of the temperature rise rate in the adiabatic reaction of the DTBP toluene solution with a mass fraction of 20% under the condition of the linearly changing heat capacity;

FIG. 7 is a schematic diagram of a linearly changing specific heat capacity obtained by calculation;

FIG. 8 is a chart of the temperature rise in an adiabatic reaction of a DTBP toluene solution with a mass fraction of 20% under the condition of a nonlinearly changing heat capacity;

FIG. 9 is a chart of the temperature rise rate in the adiabatic reaction of the DTBP toluene solution with a mass fraction of 20% under the condition of the nonlinearly changing heat capacity;

FIG. 10 is a schematic diagram of a nonlinearly changing specific heat capacity obtained by calculation.

## Detailed Description of Embodiments

According to traditional accelerating rate calorimetric methods, part of chemical reaction heat is absorbed by the sample container. To more truly simulate an adiabatic state in industrial production, a compensating heater may be used to compensate for a heat loss of a sample to guarantee an ideal adiabatic environment. The relationship between the total energy released by a reaction system (sample container + sample) and the temperature change of the reaction system is as follows:

$$\int_{t_{onset}}^{t_{final}} (P_{EH} + P_{sample})dt = \int_{T_{onset}}^{T_{final}} [C_s(T) \times m_s + C_b(T) \times m_b]dT \quad (1)$$

Wherein, $P_{EH}$ is a compensating power required for keeping the reaction system ideally adiabatic, $P_{sample}$ is a heat release power of the sample, $t_{onset}$ is a reaction start time, $t_{final}$ is a reaction end time, $C_s(T)$ is a varying specific heat capacity of the sample, $C_b(T)$ is a specific heat capacity of the sample container (measured in advance), $m_s$ is a

mass of the sample, $m_b$ is a mass of the sample container, $T_{onset}$ is a start time of an adiabatic reaction, and $T_{final}$ is an end time of the adiabatic reaction.

In order to keep the sample ideally adiabatic, that is, the sample neither releases heat to the outside nor absorbs heat from the outside in the reaction and heat released by the sample in the reaction is only used to increase the temperature of the sample, and formula (1) may be broken up into the following two formulas:

$$\int_{t_{onset}}^{t_{final}} P_{sample}\, dt = \int_{T_{onset}}^{T_{final}} C_s(T) \times m_s\, dT \tag{2}$$

$$\int_{t_{onset}}^{t_{final}} P_{EH}\, dt = \int_{T_{onset}}^{T_{final}} C_b(T) \times m_b\, dT \tag{3}$$

Formula (2) indicates that the heat release power of the sample only acts on the sample to increase the temperature of the sample to $T_{final}$ from $T_{onset}$, and formula (3) indicates that heat required for increasing the temperature of the sample container to $T_{final}$ from $T_{onset}$ is provided by an electric power input by the compensating heater.

By differentiating both sides of formula (2) and formula (3), the following two formulas are obtained:

$$P_{sample} = C_s(T) \times m_s \times \frac{dT}{dt} \tag{4}$$

$$P_{EH} = C_b(T) \times m_b \times \frac{dT}{dt} \tag{5}$$

Formula (4) indicates the relationship between the heat power generated by the sample and the specific heat and temperature rise rate of the sample, and formula (5) indicates the compensating power required for keeping the sample ideally adiabatic, that is, the sample is in an ideal adiabatic environment when the compensating heater inputs the compensating power $P_{EH}$ to the reaction system. Wherein, the value of $P_{EH}$ may be obtained by calculation according to actually measured $dT/dt$.

Under the condition that the sample is kept ideally adiabatic, a cosine modulation term $a\, cos(\omega t)$ with a small amplitude is additionally superposed on the compensated electric heating power, and when $(t_{final}\text{-}t_{onset}) >> 1/\omega$, the cosine modulation term is approximate to 0 according to formula (6):

$$\int_{t_{onset}}^{t_{final}} a\, cos(\omega t)\, dt \approx 0 \tag{6}$$

Wherein, $a$ is the amplitude of the modulating power, of which the value is generally less than that of the compensating power; $\omega$ is an angular frequency of the modulating power, of which the value is far greater than the spectral range of a self-reaction heat release temperature rise rate of the sample. Due to the fact that the integral of the superposed cosine modulating power is approximate to 0 in the whole adiabatic reaction, formula (1) may be described as:

$$\int_{t_{onset}}^{t_{final}} [P_{EH} + P_{sample} + a\, cos(\omega t)]dt = \int_{T_{onset}}^{T_{final}} [C_s(T) \times m_s + C_b(T) \times m_b]\, dT \tag{7}$$

By simultaneously differentiating both sides of formula (7), the following formula is obtained:

$$P_{EH} + P_{sample} + a\cos(\omega t) = [C_s(T) \times m_s + C_b(T) \times m_b]\frac{dT}{dt} \qquad (8)$$

Because the expression for calculating $P_{EH}$ depends on formula (5), that is, $P_{EH}$ is calculated according to the temperature rise rate $dT/dt$ at the former time, the following formula is obtained by substituting $P_{EH}$ into formula (8):

$$C_s(T)m_s\frac{dT}{dt} + C_b(T)m_b\frac{d^2T}{dt^2}\,dt = P_{sample} + a\cos(\omega t) \qquad (9)$$

Spectral separation is performed on the temperature rise rate $dT/dt$ in formula (9), and the expression of $dT/dt$ at the frequency $\omega$ is $A\cos(\omega t + \varphi)$, wherein $A$ is an amplitude, $\varphi$ is a phase angle, and both A and $\varphi$ are unknown. So, power conservation of formula (9) at the frequency $\omega$ is developed as follows;

$$C_s(T)m_s A\cos(\omega t + \varphi) + C_b(T)m_b(-A\omega\sin(\omega t + \varphi))dt = a\cos(\omega t) \qquad (10)$$

Assume

$$B = a\cos\frac{\varphi}{2} + A\omega C_b(T)m_b\sin\frac{\varphi}{2}\,dt, C = a\sin\frac{\varphi}{2} + A\omega C_b(T)m_b\cos\frac{\varphi}{2}\,dt,\ \text{formula}\ (10)$$

is transformed into:

$$C_s(T)m_s A\cos(\omega t + \varphi) = B\cos(\omega t + \frac{\varphi}{2}) + C\sin(\omega t + \varphi) \qquad (11)$$

Assume

$$D = B\cos\frac{\varphi}{2} + C\sin\frac{\varphi}{2}, E = C\cos\frac{\varphi}{2} - B\sin\frac{\varphi}{2},$$

formula (11) is transformed into:

$$C_s(T)m_s A\cos(\omega t + \varphi) = D\cos(\omega t) + E\sin(\omega t) \qquad (12)$$

Finally, the expression of $C_s(T)$ is obtained:

$$C_s(T) = \frac{\left(\sqrt{[D^2 + E^2]}\right)}{m_s A} \qquad (13)$$

Formula (13) is a final equation for solving the varying specific heat capacity of the sample. Wherein, the unknown quantities A and $\varphi$ may be obtained by temperature measurement of the sample, calculation of the temperature rise rate and Fourier transform; although the specific heat capacity $C_b(T)$ of the sample container is a known quantity varying with temperature, it varies slowly, so a calculation error caused by differentiation of $T$ by $C_b(T)$ can be ignored.
From the above description, the varying specific heat capacity in the reaction can be finally solved by means of a model through modulation of the compensating power and analysis of a reaction temperature rise curve.

The model is obtained theoretically, and in order to apply the model to an actual adiabatic instrument, discretization needs to be performed on the above process. First, in the aspect of obtaining the compensating power, formula (5) is a formula for calculating the compensating power in the model, wherein the specific heat capacity and mass of the sample container are unknown, and the temperature rise rate of the sample is obtained by calculation according to a temperature-time curve obtained in real time. During actual temperature collection, assume the temperature is collected every a time $\Delta t$, a temperature change from a time ($n$-2) to a time (n-1) is $\Delta T$(n-1), a temperature change from the time (n-1) to a time $n$ is $\Delta T$(n), and differential expressions of formula (4) and formula (5) are:

$$P_{sample} = C_s(T) \times m_s \times \frac{\Delta T(n)}{\Delta t} \tag{14}$$

$$P_{EH} = C_b(T) \times m_b \times \frac{\Delta T(n-1)}{\Delta t} \tag{15}$$

Formula (7) may be expressed as:

$$(C_b(T)m_b + C_s(T)m_s)\Delta T(n) = P_{sample}\Delta t + C_b(T)m_b\Delta T(n-1) + \frac{a}{\omega}sin(\omega\Delta t) \tag{16}$$

Then, by the same identical transformation, formula (13) may be transformed into:

$$C_s(T) = \frac{\left(\sqrt{[a^2 + (A\omega C_b(T)m_b\Delta t)^2 + 2aA\omega C_b(T)m_b sin\varphi\Delta t]}\right)}{m_s A} \tag{17}$$

According to formula (17), when the temperature collection frequency is determined and the temperature change curve of the sample is obtained, the varying specific heat capacity of the sample can be obtained in actual application.

Existing methods for solving thermal kinetic parameters based on traditional accelerating rate calorimetry are no longer applicable to the above-mentioned reaction system based on power modulation. So, the invention modifies the existing methods for solving kinetic parameters by means of an actually calculated varying specific heat capacity and a nonlinear fitting method. Specifically:

When an ideal adiabatic self-accelerating decomposition reaction of the sample is realized, formula (4) is equivalent to:

$$H\frac{d\alpha}{dt} = [C_s(T) \times m_s]\frac{dT}{dt} \tag{18}$$

Wherein, $H$ is reaction heat of the sample, and $\alpha$ is a conversion rate of the sample in the reaction.

An integral operation is performed on formula (18), and a measured specific heat capacity is substitute into formula (18) to obtain reaction heat by calculation:

$$H\int_{\alpha_{onset}}^{\alpha_{final}} d\alpha = m_s \int_{T_{onset}}^{T_{final}} C_s(T)dT \tag{19}$$

Wherein, $\alpha_{onset}$ is a conversion rate of the sample at the beginning of the reaction (the value is generally 0), and $\alpha_{final}$ is a conversion rate of the sample at the end of the reaction (the value is generally 1).

The corresponding relationship of the conversion rate in the reaction with $H$, $C_s(T)$ and Tis:

$$\alpha = \alpha_{onset} + \frac{m_s \int_{T_{onset}}^{T} C_s(T)dT}{H} \qquad (20)$$

As for an elementary reaction,

$$r = \frac{d\alpha}{dt} = k(T)f(\alpha) = k_0 e^{-\frac{E}{RT}}(1-\alpha)^n \qquad (21)$$

Wherein, $r$ is a chemical reaction rate of the reaction system, $d\alpha/dt$ is a change rate of the conversion rate of the reaction, $k(T)$ is a reaction rate constant, $E$ is activation energy, $k_0$ is a pre-exponential factor, $R$ is a universal gas constant, and $n$ is a reaction order.

Formula (20) is substituted into formula (21) to establish a self-reaction heat release equation to obtain a reaction model:

$$\frac{dT}{dt} = \frac{k_0 H}{C_s(T)m_s} exp\left(-\frac{E}{RT}\right)\left(1 - \frac{m_s \int_{T_{onset}}^{T} C_s(T)dT}{H}\right)^n \qquad (22)$$

Finally, nonlinear fitting based on the reaction model is performed to calculate the three kinetic factors for thermal analysis. The core idea of the nonlinear fitting method is as follows: with the calculated kinetic parameters (the activation energy $E$, the pre-exponential factor $A$ and the reaction order $n$) as undetermined coefficients, calculation is performed by means of the model through a least square fit method to obtain a self-accelerating temperature rise rate, the self-accelerating temperature rise rate obtained by means of the model and a self-accelerating temperature rise rate measured by a test are fitted, and an unknown vector $\theta(E,A,n)$ of a kinetic equation is obtained with the fitting degree SS as an evaluation indicator, wherein the expression of SS is:

$$SS = \sum_{i=1}^{N}\left[\left(\frac{dT_m(t,\theta)}{dt}\right)_i - \left(\frac{dT(t)}{dt}\right)_i\right]^2 \qquad (23)$$

Different values of the activation energy $E$, the pre-exponential factor A and the reaction order $n$ are set to calculate $SS$, and an optimal vector $\theta(E,A,n)$ obtained when the value of SS is the smallest is the kinetic parameter value of the reaction of the sample.

By solving the varying specific heat capacity of the sample, the method for solving thermal kinetic parameters can be improved, and heat released by the sample in the reaction can also be solved according to the following formula:

$$Q = \int_{T_{onset}}^{T_{final}} C_s(T)m_s dT \qquad (24)$$

Embodiment:

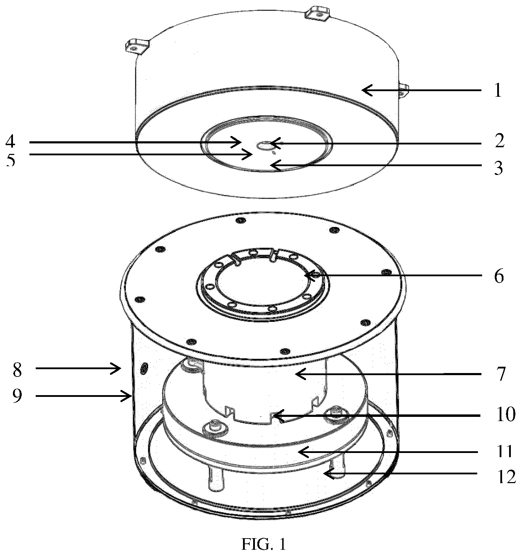

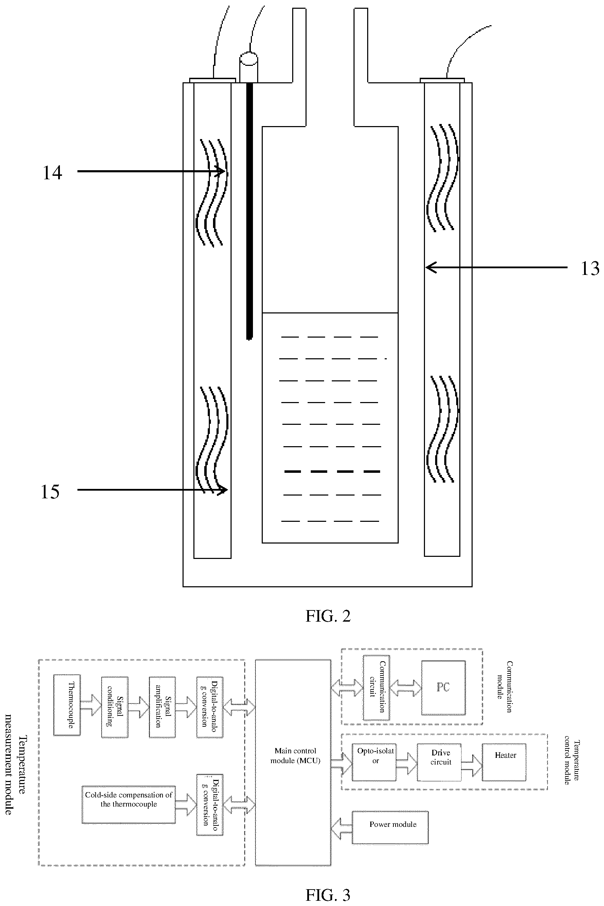

This embodiment designs an accelerating rate calorimetric device capable of dynamically measuring the specific heat capacity, comprising a calorimetric furnace, a compensating heater, a cylindrical sample container, and a sample container and sample temperature sensor. FIG. 1 and FIG. 2 illustrate specific structural diagrams of the accelerating rate calorimetric device.

As shown in FIG. 1 which illustrates the basic structure of the calorimetric furnace, the calorimetric furnace comprises a furnace lid shell 1, wherein a furnace lid 3 is fixed in the furnace lid shell and is provided with a sample container and sample temperature sensor wire hole 2, a compensating heater wire hole 5, and a cylindrical sample container assembly structure 4. The calorimetric furnace further comprises a furnace body shell 9, wherein a support pillar 12 is assembled in the furnace body shell and is used to support a ceramic fiber member 11, a furnace bottom 10 and a furnace wall 7 are fixed on the ceramic fiber member, a hole 6 for assembling a furnace wall heating rod is formed in the furnace wall, and a furnace wall heating rod wire hole 8 is formed in the furnace body shell.

FIG. 2 illustrates the sample container, the compensating heater and the sample and sample container temperature sensor (used to measure the temperature of a sample and the sample container, the temperature field of the sample and the temperature field of the sample container are homogeneous by default). The compensating heater 13 is a heating rod. The sample and sample container temperature sensor 14 is an N-type thermocouple. The sample container 15 is cylindrical, and is specifically a hollow cylinder with a certain wall thickness. The sample container 15 is made of titanium alloy which is resistant to high temperature, high in strength, good in mechanical performance and good in corrosion resistance.

Based on the accelerating rate calorimetric device, a temperature measurement and power control circuit is designed. The temperature measurement and power control circuit comprises a main control circuit, a power module, a temperature measurement module, a temperature control module and a communication module. FIG. 3 illustrates a block diagram of the specific hardware design:

The main control circuit is the core for realizing overall control of a system, and normal and ordered realization of the functions of all units depends on the control of the main control circuit. The power module is used to supply power to the entire main control circuit and the compensating heater. The temperature measurement module is used to measure the temperature of the furnace lid, the furnace wall, the furnace bottom, the sample container and the sample. The temperature control circuit comprises a furnace body heating rod control circuit and a compensating heater control circuit. The communication module sends temperature data of the sample.

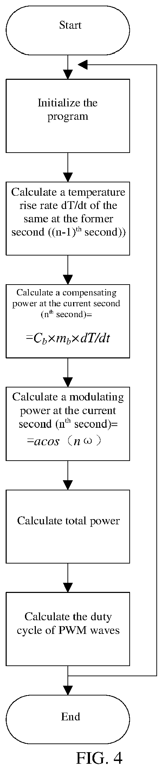

After mechanical and hardware design of the device is completed, a program algorithm is designed to realize the calculation and output of a compensating power and a modulating power. The specific flow diagram is shown in FIG. 4.

The compensating power and the modulating power are provided by an electric power output by the heating rod in FIG. 2, power is supplied to the compensating heater by a switch power supply, then the temperature control module is used for on-off control of the power supply. Specifically, the temperature control module outputs PWM signals to control on-off of the power supply of the compensating heater so as to output the required electric power.

First, the compensating power is calculated. In this embodiment, the temperature control frequency of the device is 5Hz, the temperature measurement frequency is 100Hz, that is, the duty cycle of the PWM signals is changed five times every 1s, and the temperature of the reaction system is measured every 0.01s. According to formula (5), it is necessary to know the mass and specific heat capacity of the sample container and the temperature rise rate of the sample in the reaction to calculate the compensating power. Wherein, the mass and specific heat capacity of the sample container are known quantities because the mass of the sample container can be obtained by weighing and the specific heat capacity of the sample container is a constant value under the condition that materials in the sample container are known, and only the temperature rise rate of the sample needs to be calculated. The calculation and issue of the compensating power are started from the 0.4s of a test, the temperature rise rate of the sample at the 0.2s is solved by differentiating the temperature-time signal at the 0.2s, and this temperature rise rate can approximately represent the temperature rise rate at the 0.4s. The compensating power required by the reaction system at the 0.4s is a product of the mass and specific heat capacity of the sample container and the temperature rise rate of the sample at the 0.2s. In this way, the compensating power at the 0.6s, the 0.6s, ..., and the $n$s are solved.

Then, the modulating power is calculated. When a modulation signal $a\cos(\omega t)$ is superposed on the compensating power, discretization is performed on the modulation signal to obtain an actual modulating power required every 0.2s, so the actual modulating power required at the 0.4s is $a\cos(0.4\omega)$, the actual modulating power required at the 0.6s is $a\cos(0.6\omega)$, and the actual modulating power required at the ns is $a\cos(n\omega)$.

The compensating power and the modulating power calculated every 0.2s are added to obtain an electric power finally output every 0.2s. A ratio of the electric power to the total power of the heating rod is the duty cycle of the PWM output signal. In this way, power control every 0.2s is realized, and thus, temperature control is realized.

By using the device to test a sample, a temperature-time signal of the sample is finally obtained. The temperature-time signal of the sample needs to be further processed to obtain the varying specific heat capacity of the sample. The specific data processing method is as follows:

1. The temperature-time signal is differentiated to obtain a temperature rise rate-time signal of the sample.
2. The temperature rise rate-time signal is segmented every 20s, so that the specific heat capacity can be calculated every 20s.
3. For any one 20s signal obtained, the signal is decomposed on a complex plane to obtain a real part, an imaginary part and a modulus of the signal.
4. The real part and the imaginary part of the signal are processed by means of an arc-tangent function to obtain $\varphi$ in formula (17), wherein the modulus is $A$ in formula (17).
5. A and $\varphi$ are substituted into formula (17) in which $\alpha$, $\omega$, $C_b(T)$, $m_b$, $\Delta t$ and $m_s$ are all known quantities to obtain the varying specific heat capacity $C_s(T)$ of the sample every 20s.

The varying specific heat capacity $C_s(T)$ is used to solve thermal kinetic parameters to obtain the activation energy, pre-exponential factor and reaction order of the reaction. The specific process is based on nonlinear fitting of a reaction model. Formula (22) is a self-accelerating decomposition reaction model, in which $k_0$, $E$ and $n$ are three kinetic factors to be solved, $m_s$ and $R$ are constant values, and $H$, $C_s(T)$, $T$ and $T_{onset}$ are quantities that can be measured or solved. At a time $t$, a set of three kinetic factors are selected to solve a theoretical temperature rise rate $dT_m(t, \theta)/dt$ according to formula (22), and an actual temperature rise rate $dT/dt$ is solved according to actual data at the same time. In the whole reaction process, all $dT_m(t, \theta)/df$ and all $dT/dt$ are solved every a certain time and are substituted into formula (23) to obtain a fitting degree for evaluating the quality of this set of three kinetic factors. The smaller the value of the fitting degree, the higher the fitting degree, and the closer the selected three kinetic factors to the actual condition. Then, the three kinetic factors are searched by a search algorithm to obtain a set of three kinetic factors with the optimal fitting degree, that is, the optimal kinetic parameters of the reaction of the sample are solved.

Because there is no standard substance (capable of releasing heat during thermal decomposition and containing known specific heat and components) to verify the method of the invention, the method is verified by simulation.

A reaction process in which a modulating power with a certain amplified is applied is simulated by Matlab software. A DTBP toluene solution of which the mass factor is 20% and the reaction kinetic parameters are from ASTM E2781 is used as a reactant for simulation, wherein the reaction order is set as 1, the pre-exponential factor of the reaction is set as $5.5 \times 10^{15} s^{-1}$, the activation energy is set as 157000J/mol, the reaction start time is set as 398.2K, the ideal gas constant is set as 8.314J/(mol*K), the reaction heat of the solution in unit mass is set as 225J/g, the mass of a heat transfer medium and a sample container is set as 50g, the specific heat capacity of the heat transfer medium and the sample is set as 0.5J/(K*g), the mass of the sample is set as 6.0g, the reaction step is set as 0.05s, the simulation time is set as 240min, and the modulating power is set as $cos(2\pi t)$.

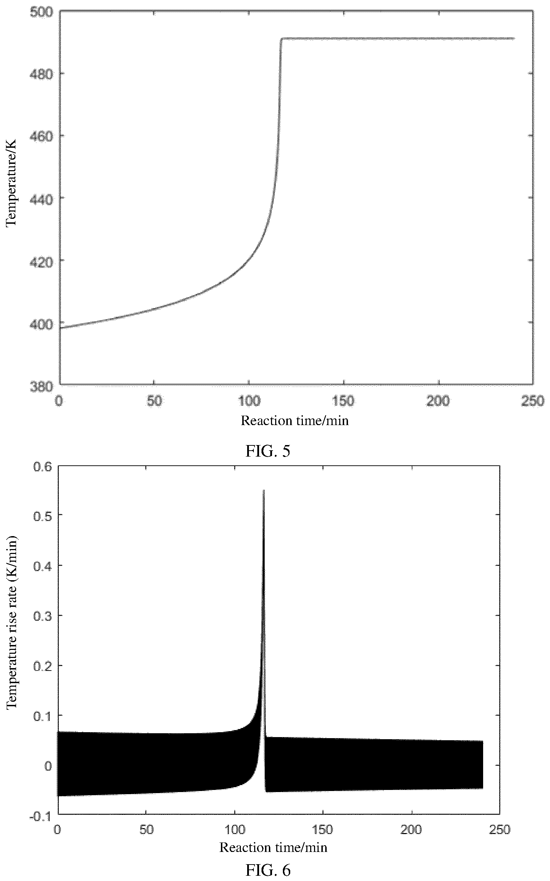

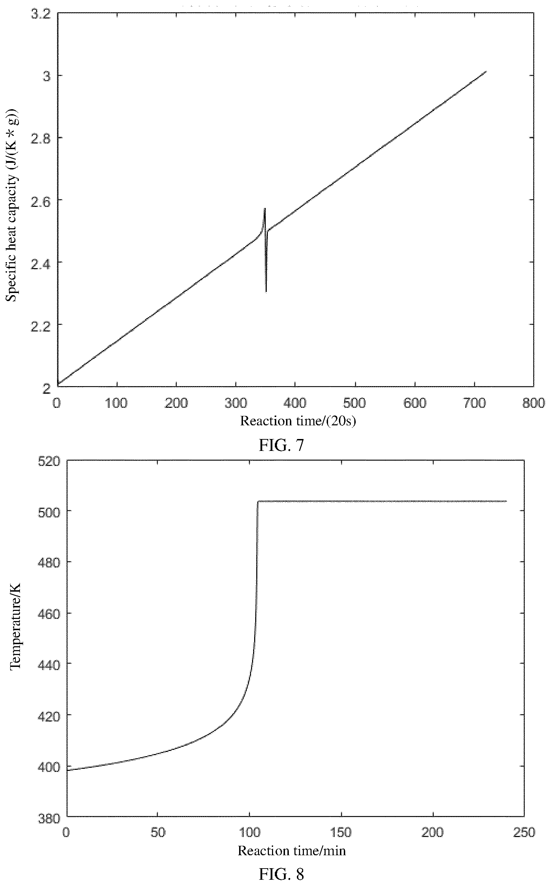

In a first simulation, the specific heat capacity of the sample is set as a changing value that linearly increases to 3J/(K*g) from 2J/(K*g) within the simulation time, and the simulation result is shown in FIG. 5, FIG. 6 and FIG. 7. As can be seen from FIG. 5, the reaction starts from 398.2K and ends at 490.9K, and the reaction is the most violent from 110min to 115min. As can be seen from FIG. 6, the temperature rise rate in the reaction fluctuates sinusoidally before 110min and rises sharply from 110min to 115min. As can be seen from FIG. 7 which illustrates the varying specific heat capacity calculated every 20s by means of a model, the specific heat capacity increases linearly except from 110min to 115min, thus meeting the expectation. From 110min to 115min, due to spectrum overlapping of the reaction heat release power and the modulating power, a deviation of the varying specific heat capacity is caused, and this deivation may be eliminated by changing the modulating power within this time period.

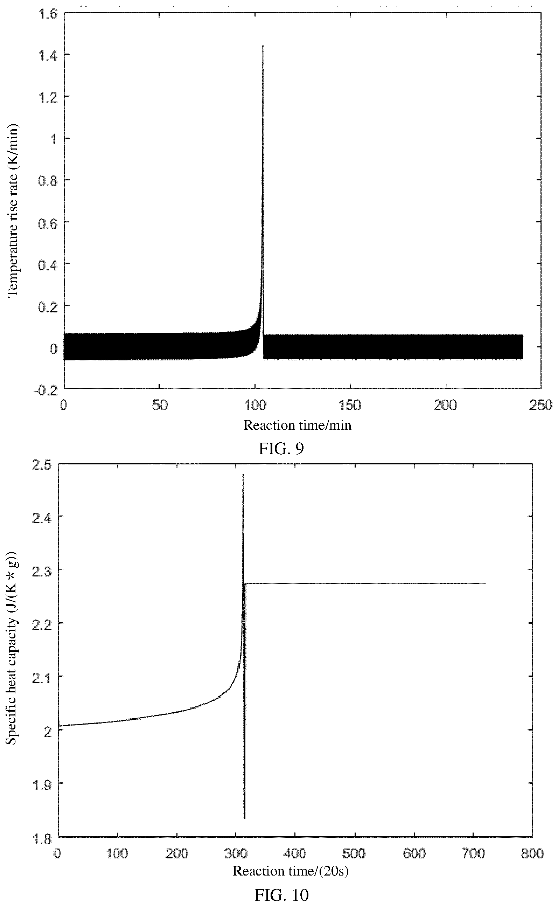

In a second simulation, the specific heat capacity of the sample = 1+ current temperature/start temperature J/(K*g), that is, the specific heat capacity of the sample has an initial value of 2J/(K*g) and is a nonlinearly changing value that increases according to the same trend as the temperature, and the simulation result is shown in FIG. 8, FIG. 9 and FIG. 10. As can be seen from FIG. 8, the reaction starts from 398.2K and ends at 503.7K, and the reaction is the most violent from 100min to 105min. As can be seen from FIG. 6, the temperature rise rate of the reaction rises sharply from 100min to 105min. As can be seen from FIG. 10 which illustrates the varying specific heat capacity calculated every 20s by means of a model, the calculated specific heat capacity changes as expected.

The above two simulations respectively simulate the condition where the specific heat capacity of the sample is a value changing linearly and the condition where the specific heat capacity of the sample is a value changing nonlinearly, and the simulation results indicate that the method of the invention can accurately calculate the variable specific heat capacity of the sample in the reaction, thus verifying the validity of the method of the invention.

**Claims**

1. A method for measuring the varying specific heat capacity of an adiabatic reaction based on compensating power modulation, wherein:

   a dynamic heat loss of a sample in an adiabatic reaction is compensated in real time by additional heating to keep the sample in an ideal adiabatic environment in the reaction;
   **characterized in that**:

   a compensating power is modulated, that is, a cosine modulation term is loaded during the additional heating to realize oscillation of a temperature rise rate in the reaction;
   differential calculation and discrete Fourier transform are performed on an adiabatic reaction temperature of the sample in a modulated state, and a modulation temperature rise signal and a self-accelerating reaction temperature rise signal are separated to measure a varying specific heat capacity; the method specifically comprises the following steps:

(a) measuring a specific heat capacity and a mass of a sample container, and a mass of the sample;
(b) calculating a real-time power output of a compensating heater;
(c) outputting Pulse-Width Modulation - PWM signals with different duty cycles by a temperature control module;
(d) measuring a temperature change of the sample in the reaction;
(e) differentiating the temperature change of the sample; and
(f) solving the varying specific heat capacity according to the following formula

$$C_s(T) = \frac{\left(\sqrt{[a^2 + (A\omega C_b(T)m_b\Delta t)^2 + 2aA\omega C_b(T)m_b sin\varphi\Delta t]}\right)}{m_s A}$$ .

where "Cs(T)" is the varying specific heat capacity of the sample every x-seconds, "a" is the amplitude of the modulating power, "$\omega$" is the angular frequency of the modulating power, "Cb(T)" is the specific heat capacity of the sample container, "mb" is the mass of the sample container, "$\Delta t$" is temperature collection interval, "cp" is the phase angle, "ms" is the mass of the sample; and "A" is the modulus obtained by decomposing the x-second signal on the complex plane.

2. The method for measuring the varying specific heat capacity of an adiabatic reaction based on compensated power modulation according to Claim 1, wherein before step (b), the method further comprises: increasing a temperature of the sample to a reaction start time of the sample, and with a reaction start time of the sample as a time 0, collecting a temperature of a reaction system every a time $\Delta t$.

3. The method for measuring the varying specific heat capacity of an adiabatic reaction based on compensated power modulation according to Claim 2, wherein the real-time power in Step (b) comprises a real-time compensating power and a real-time modulating power.

4. The method for measuring the varying specific heat capacity of an adiabatic reaction based on compensated power modulation according to Claim 1, wherein the duty cycle of the PWM signal at each time is a ratio of a required electric power to a total power of the compensating heater.

5. The method for measuring the varying specific heat capacity of an adiabatic reaction based on compensated power modulation according to Claim 1, wherein a temperature-time signal of the sample in the reaction is obtained through Step (d).

6. The method for measuring the varying specific heat capacity of an adiabatic reaction based on compensated power modulation according to Claim 1, wherein a temperature rise rate-time signal of the sample is obtained through Step (e).

7. The method for measuring the varying specific heat capacity of an adiabatic reaction based on compensated power modulation according to Claim 6, wherein Step (f) specifically comprises:

(1) segmenting the temperature rise rate-time signal every $x$ seconds, and for any one x-second signal obtained, decomposing the signal on a complex plane to obtain a real part, an imaginary part and a modulus of the signal; and
(2) calculating the varying specific heat capacity $C_s(T)$ of the sample every $x$ seconds:

$$C_s(T) = \frac{\left(\sqrt{[a^2 + (A\omega C_b(T)m_b\Delta t)^2 + 2aA\omega C_b(T)m_b sin\varphi\Delta t]}\right)}{m_s A}$$

wherein, $a$ is an amplitude of a modulating power, $\omega$ is an angular frequency of the modulating power, $C_b(T)$ is the specific heat capacity of the sample container, $m_b$ is the mass of the sample container, $m_s$ is the mass of the measured sample, $\Delta t$ is a temperature collection interval, $\varphi$ is a phase angle which is determined according to the real part and the imaginary part of the $x$-second signal, and $A$ is the modulus obtained by decomposing the $x$-second signal on the complex plane.

**Patentansprüche**

1. Verfahren zum Messen der variierenden spezifischen Wärmekapazität einer adiabatischen Reaktion auf Basis von Kompensationsleistungsmodulation, wobei:

   ein dynamischer Wärmeverlust einer Probe in einer adiabatischen Reaktion in Echtzeit durch zusätzliches Erhitzen kompensiert wird, um die Probe in einer idealen adiabatischen Umgebung in der Reaktion zu halten; **dadurch gekennzeichnet, dass**:

   eine Kompensationsleistung moduliert wird, d. h. ein Kosinus-Modulationsterm während des zusätzlichen Erhitzens geladen wird, um Oszillation einer Temperaturanstiegsrate in der Reaktion zu bewirken; Differentialberechnung und diskrete FourierTransformation an einer adiabatischen Reaktionstemperatur der Probe in einem modulierten Zustand durchgeführt werden, und ein Modulationstemperaturanstiegssignal und ein selbstbeschleunigendes Reaktionstemperaturanstiegssignal getrennt werden, um eine variierende spezifische Wärmekapazität zu messen; wobei das Verfahren insbesondere die folgenden Schritte umfasst:

   (a) Messen einer spezifischen Wärmekapazität und einer Masse eines Probenbehälters, und einer Masse der Probe;
   (b) Berechnen einer Echtzeit-Leistungsabgabe einer Kompensationsheizvorrichtung;
   (c) Ausgeben von Pulsweitenmodulations-, PWM-, Signalen mit unterschiedlichen Tastgraden durch ein Temperatursteuermodul;
   (d) Messen einer Temperaturänderung der Probe in der Reaktion;
   (e) Differenzieren der Temperaturänderung der Probe; und
   (f) Lösen der variierenden spezifischen Wärmekapazität nach der folgenden Formel

$$C_s(T) = \frac{\left(\sqrt{[a^2 + (A\omega C_b(T) m_b \Delta t)^2 + 2aA\omega C_b(T) m_b sin\varphi \Delta t]}\right)}{m_s A}$$

   wobei "Cs(T)" die variierende spezifische Wärmekapazität der Probe alle x Sekunden ist, "a" die Amplitude der Modulationsleistung ist, "ω" die Winkelfrequenz der Modulationsleistung ist, "Cb(T)" die spezifische Wärmekapazität des Probenbehälters ist, "mb" die Masse des Probenbehälters ist, "Δt" das Temperatursammelintervall ist, "φ" der Phasenwinkel ist, "ms" die Masse der Probe ist; und "A" der Modulus ist, der durch Zerlegen des x-Sekunden-Signals in der komplexen Ebene erhalten wird.

2. Verfahren zum Messen der variierenden spezifischen Wärmekapazität einer adiabatischen Reaktion auf Basis von Kompensationsleistungsmodulation nach Anspruch 1, wobei das Verfahren vor Schritt (b) weiter umfasst: Erhöhen einer Temperatur der Probe bis zu einem Reaktionsstartzeitpunkt der Probe, und, mit einem Reaktionsstartzeitpunkt der Probe als Zeitpunkt 0, Sammeln einer Temperatur eines Reaktionssystems zu jedem Zeitpunkt Δt.

3. Verfahren zum Messen der variierenden spezifischen Wärmekapazität einer adiabatischen Reaktion auf Basis von Kompensationsleistungsmodulation nach Anspruch 2, wobei die Echtzeitleistung in Schritt (b) eine Echtzeit-Kompensationsleistung und eine Echtzeit-Modulationsleistung umfasst.

4. Verfahren zum Messen der variierenden spezifischen Wärmekapazität einer adiabatischen Reaktion auf Basis von Kompensationsleistungsmodulation nach Anspruch 1, wobei der Tastgrad des PWM-Signals zu jedem Zeitpunkt ein Verhältnis einer benötigten elektrischen Leistung zu einer Gesamtleistung der Kompensationsheizvorrichtung ist.

5. Verfahren zum Messen der variierenden spezifischen Wärmekapazität einer adiabatischen Reaktion auf Basis von Kompensationsleistungsmodulation nach Anspruch 1, wobei ein Temperatur-Zeitsignal der Probe in der Reaktion durch Schritt (d) erhalten wird.

6. Verfahren zum Messen der variierenden spezifischen Wärmekapazität einer adiabatischen Reaktion auf Basis von Kompensationsleistungsmodulation nach Anspruch 1, wobei ein Temperaturanstiegsraten-Zeitsignal der Probe durch Schritt (e) erhalten wird.

7. Verfahren zum Messen der variierenden spezifischen Wärmekapazität einer adiabatischen Reaktion auf Basis von Kompensationsleistungsmodulation nach Anspruch 6, wobei Schritt (f) insbesondere umfasst:

(1) Segmentieren des Temperaturanstiegsraten-Zeitsignals alle *x* Sekunden, und, für jedes erhaltene *x*-Sekunden-Signal, Zerlegen des Signals in einer komplexen Ebene, um einen Realteil, einen Imaginärteil und einen Modulus des Signals zu erhalten; und
(2) Berechnen der variierenden spezifischen Wärmekapazität $C_s(T)$ der Probe alle *x* Sekunden:

$$C_s(T) = \frac{\left(\sqrt{[a^2 + (A\omega C_b(T)m_b\Delta t)^2 + 2aA\omega C_b(T)m_b \sin\varphi\Delta t]}\right)}{m_s A}$$

wobei a eine Amplitude einer Modulationsleistung ist, $\omega$ eine Winkelfrequenz der Modulationsleistung ist, $C_b(T)$ die spezifische Wärmekapazität des Probenbehälters ist, $m_b$ die Masse des Probenbehälters ist, $m_s$ die Masse der gemessenen Probe ist, $\Delta t$ ein Temperatursammelintervall ist, $\varphi$ ein Phasenwinkel ist, der gemäß dem Realteil und dem Imaginärteil des x-Sekunden-Signals bestimmt wird, und A der Modulus ist, der durch Zerlegen des x-Sekunden-Signals in der komplexen Ebene erhalten wird.

**Revendications**

1. Procédé de mesure de la capacité thermique spécifique variable d'une réaction adiabatique sur la base d'une modulation de puissance de compensation, dans lequel :

une perte de chaleur dynamique d'un échantillon dans une réaction adiabatique est compensée en temps réel par un chauffage supplémentaire pour maintenir l'échantillon dans un environnement adiabatique idéal dans la réaction ;
**caractérisé en ce que** :

une puissance de compensation est modulée, c'est-à-dire qu'un terme cosinusoïdal de modulation est chargé pendant le chauffage supplémentaire pour réaliser une oscillation d'une vitesse de montée en température dans la réaction ;
un calcul différentiel et une transformée de Fourier discrète sont effectués sur une température réactionnelle adiabatique de l'échantillon dans un état modulé, et un signal de montée en température de modulation et un signal de montée en température réactionnelle d'autoaccélération sont séparés pour mesurer une capacité thermique spécifique variable ; le procédé comprend spécifiquement les étapes suivantes :

(a) la mesure d'une capacité thermique spécifique et d'une masse d'un récipient pour échantillon, et d'une masse de l'échantillon ;
(b) le calcul d'une puissance de sortie en temps réel d'un dispositif de chauffage de compensation ;
(c) la sortie de signaux de modulation d'impulsions en largeur - PWM avec différents cycles de service par un module de régulation de température ;
(d) la mesure d'un changement de température de l'échantillon dans la réaction ;
(e) la différentiation du changement de température de l'échantillon ; et
(f) la résolution de la capacité thermique spécifique variable selon la formule suivante

$$C_s(T) = \frac{\left(\sqrt{[a^2 + (A\omega C_b(T)m_b\Delta t)^2 + 2aA\omega C_b(T)m_b \sin\varphi\Delta t]}\right)}{m_s A}$$

où « Cs(T) » est la capacité thermique spécifique variable de l'échantillon toutes les x secondes, « a » est l'amplitude de la puissance de modulation, « ω » est la fréquence angulaire de la puissance de modulation, « Cb(T) » est la capacité thermique spécifique du récipient pour échantillon, « mb » est la masse du récipient pour échantillon, « Δt » est un intervalle de collecte de température, « φ » est l'angle de phase, « ms » est la masse de l'échantillon ; et « A » est le module obtenu en décomposant le signal à x secondes sur le plan complexe.

2. Procédé de mesure de la capacité thermique spécifique variable d'une réaction adiabatique sur la base d'une modulation de puissance compensée selon la revendication 1, dans lequel avant l'étape (b), le procédé comprend en outre : l'augmentation d'une température de l'échantillon jusqu'à un instant de début de réaction de l'échantillon, et avec un instant 0 comme instant de début de réaction de l'échantillon, la collecte d'une température d'un système réactionnel à chaque instant $\Delta t$.

3. Procédé de mesure de la capacité thermique spécifique variable d'une réaction adiabatique sur la base d'une modulation de puissance compensée selon la revendication 2, dans lequel la puissance en temps réel dans l'étape (b) comprend une puissance de compensation en temps réel et une puissance de modulation en temps réel.

4. Procédé de mesure de la capacité thermique spécifique variable d'une réaction adiabatique sur la base d'une modulation de puissance compensée selon la revendication 1, dans lequel le cycle de service du signal PWM à chaque instant est un rapport d'une puissance électrique requise sur une puissance totale du dispositif de chauffage de compensation.

5. Procédé de mesure de la capacité thermique spécifique variable d'une réaction adiabatique sur la base d'une modulation de puissance compensée selon la revendication 1, dans lequel un signal de temps-température de l'échantillon dans la réaction est obtenu par l'étape (d).

6. Procédé de mesure de la capacité thermique spécifique variable d'une réaction adiabatique sur la base d'une modulation de puissance compensée selon la revendication 1, dans lequel un signal de temps-vitesse de montée en température de l'échantillon est obtenu par l'étape (e).

7. Procédé de mesure de la capacité thermique spécifique variable d'une réaction adiabatique sur la base d'une modulation de puissance compensée selon la revendication 6, dans lequel l'étape (f) comprend spécifiquement :

(1) la segmentation du signal de temps-vitesse de montée en température toutes les x secondes, et pour tout signal à x secondes obtenu, la décomposition du signal sur un plan complexe pour obtenir une partie réelle, une partie imaginaire et un module du signal ; et
(2) le calcul de la capacité thermique spécifique variable $C_s(T)$ de l'échantillon toutes les $x$ secondes :

$$C_s(T) = \frac{\left(\sqrt{[a^2 + (A\omega C_b(T)m_b\Delta t)^2 + 2aA\omega C_b(T)m_b sin\varphi\Delta t]}\right)}{m_s A}$$

dans lequel, $a$ est une amplitude d'une puissance de modulation, $\omega$ est une fréquence angulaire de la puissance de modulation, $C_b(T)$ est la capacité thermique spécifique du récipient pour échantillon, $m_b$ est la masse du récipient pour échantillon, $m_s$ est la masse de l'échantillon mesuré, $\Delta t$ est un intervalle de collecte de température, $\varphi$ est un angle de phase qui est déterminé en fonction de la partie réelle et de la partie imaginaire du signal à x secondes, et A est le module obtenu en décomposant le signal à x secondes sur le plan complexe.

FIG. 1

FIG. 2

FIG. 3

FIG. 4

FIG. 5

FIG. 6

FIG. 7

FIG. 8

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Measurement and calculation method of changing heat capacities during the reaction. *THERMOCHIMICA ACTA,* 01 May 2019, vol. 675, 55-62
- Modeling of a power compensated adiabatic reaction system for temperature control design and simulation analyses. *THERMOCHIMICA ACTA,* 01 May 2019, vol. 657, 104-109
- **TOWNSEND D.I ; TOU J.C.** Thermal hazard evaluation by an accelerating rate calorimeter[J. *Thermochimica Acta,* 1980, vol. 37 (1), 1-30
- **TOU J.C ; WHITING L.F.** The thermokinetic performance of an accelerating rate calorimeter[J. *Thermochimica Acta,* 1981, vol. 48 (1), 21-42
- **SUN JINHUA ; DING HUI.** Thermal hazard evaluation of chemical substances [M. Science Press, 2005
- **IWATA Y ; MOMOTA M ; KOSEKI H.** Thermal risk evaluation of organic peroxide by automatic pressure tracking adiabatic calorimeter[J. *Journal of Thermal Analysis and Calorimetry,* 2006, vol. 85 (3), 617-622
- **CHARLES F. ASKONAS ; DR. JAMES ; P. BURELBACH.** The versatile VSP2: a tool for adiabatic thermal analysis and vent sizing application[C. *North American Thermal Analysis Society, 28th Annual Conference,* 2000
- **KIMURA A ; OTSUKA T.** Performance evaluation of differential accelerating rate calorimeter for the thermal runaway reaction of di-tert-butyl peroxide[J. *Journal of Thermal Analysis and Calorimetry,* 2013, vol. 113 (3), 1858-1591